# EUROPEAN PATENT APPLICATION

(11) **EP 0 872 188 A2**
(43) Date of publication of application: **21.10.1998**
(21) Application number: 98105733.4
(22) Date of filing: 30.03.1998
(51) Int. Cl.: A23L 1/16

(54) **Method for preparing gluten-free pasta based on corn and/or rice and gluten-free pasta obtained with the method**

(30) Priority: 18.04.1997 IT PD970082
(71) Applicant: Favero Antonio S.r.l., 35127 Padova (IT)
(72) Inventor: Favero, Giampaolo, 35132 Padova (IT)
(74) Representative: Modiano, Guido, Dr.-Ing.

(57) **Abstract**

The method consists in preparing a gluten-free pasta starting from a corn and/or rice flour which is partially gelatinized and to which a monoglyceride is initially added. Humidification is then performed in a vacuum mixing tank, followed by extrusion by means of a multistage controlled-temperature extruder-cooker. The pasta is cut in a die and used after pre-drying for undried pasta or is dried until it reaches a final humidity of approximately 12% for dried pasta. The resulting pasta is suitable for use in the dietary field and in particular for feeding patients affected by coeliac disease, diabetes and other similar diseases and has good organoleptic and palatability characteristics.

## Description

The present invention relates to a method for preparing gluten-free pasta based on corn and/or rice and a gluten-free pasta obtained with said method.

The method according to the present invention is adapted to produce a gluten-free pasta starting from a flour based on corn and/or rice.

Gluten-free pastas are particularly used in the dietary field and in the prevention and treatment of some diseases, such as coeliac disease, which is caused by intolerance to food based on wheat and cereals in general.

This disease causes lesions to the mucosa of the small intestine in predisposed individuals.

This disease causes gastrointestinal suffering and can involve the entire body with complications.

The factor responsible for coeliac disease and other diseases is gluten, which is a protein contained in wheat and in other cereals.

Treatment consists in adopting a diet that includes no wheat-based food, which is not tolerated, while corn and rice are harmless.

Gluten-free pastas are known which are obtained by treating the initial flours so as to eliminate the gluten.

However, said pastas are practically flavorless and therefore scarcely palatable, which leads to unsatisfactory consumption on the part of patients.

The aim of the present invention is to provide a method for preparing a gluten-free pasta having good organoleptic characteristics and which is therefore adequately palatable.

Within the scope of this aim, an object of the present invention is to provide a method which uses easily commercially available raw materials and simple processes.

Another object of the present invention is to provide a method which allows to prepare various undried or dried pastas.

This aim, these objects and others which will become apparent hereinafter are achieved by a method for preparing a gluten-free pasta based on corn and/or rice flour which is partially gelatinized with a steaming treatment performed beforehand, characterized in that it comprises the steps of:
a) adding a monoglyceride to the corn and/or rice flour, which has been partially gelatinized by steaming;
b) humidifying the flour of step a) in a vacuum mixing tank until the obtained mix reaches a humidity of 35-45%;
c) extruding by means of a multistage controlled-temperature extruder-cooker;
d) cutting the pasta in a die and pre-drying it at a controlled temperature.

If undried pasta is to be prepared, the method ends with pre-drying, while if dried pasta is to be obtained, additional drying is performed until a final humidity of 12-12.5% is reached.

The method for preparing a gluten-free pasta based on corn is described by way of example.

The method begins by adding a monoglyceride, in an amount equal to 1%, to a corn flour which has been partially gelatinized with a steaming treatment performed beforehand, said steaming treatment being outside the scope of the present method.

The monoglyceride used in the tests conducted was a commercial product manufactured by the VANISCO company and marketed under the trade-name AMIDAN ES K.

The corn flour with the above addition was prehumidified in a vacuum mixing tank until it reached a humidity of 37-38%.

The resulting mix is fed through a dosage screw feeder into the cooking screw feeder of an extruder.

The extruder is preferably a low-shear single-screw extruder with four stages, each whereof is thermostatically temperature-controlled.

Temperature control must be highly accurate in order to optimize and keep constant, during production, the degree of gelatinization of the extruded product.

The four-stage extruder, thermostatically controlled by means of a fluid that circulates in the jackets of the cylinder, is kept at the following temperatures:
-- first stage at 80^{o} Celsius;
-- second and third stages at 90^{o} Celsius;
-- fourth stage at 50^{o} Celsius.

The temperature values are measured inside the extruder and therefore relate to the actual temperature of the product and not to the temperature of the thermostatic control fluid.

The extruder must be such as to minimize mechanical damage to the starch caused by shear and in any case to allow achieving an optimum level of gelatinization, such as to obtain a pasta having good elasticity and consistency characteristics.

A die bearing the shape selected for the pasta is mounted at the outlet of the extruder.

The pasta cut in the die is sent to a vibrating pre-drier, where the product is ventilated for a few minutes at a temperature of 30-40^{o} Celsius.

In these conditions, the product can be used as undried pasta.

If a long-lasting dried pasta is to be obtained, the pre-dried product is dried in a static drier at a temperature of 50^{o} Celsius, with a relative humidity of 75%.

Drying is continued until the product reaches a final humidity of approximately 12%.

The resulting pasta has characteristics which require cooking with methods which are substantially identical to those of conventional wheat pasta.

The average cooking time is 10-12 minutes and once the pasta has been drained it has good elasticity, does not tend to sag and surface tackiness is not very evident.

The sediment that the pasta leaves in the cooking water is very modest (approximately 3%).

When chewed, the product is found to be sufficiently elastic and does not tend to clog in the mouth, while its organoleptic characteristics as to taste, aroma and color are good.

The pasta is found to be adequately palatable and, in view of the initial products, which are white or yellow corn flour or rice flour or a combination of both, is suitable for diets and for treatment of patients or in any case of individuals who do not tolerate gluten.

## Claims

1. A method for preparing a gluten-free pasta based on corn and/or rice flour which is partially gelatinized with a steaming treatment performed beforehand, characterized in that it comprises the steps of:
a) adding a monoglyceride to the corn and/or rice flour, which has been partially gelatinized by steaming;
b) humidifying the corn and/or rice flour, with a monoglyceride added thereto, in a vacuum mixing tank until the obtained mix reaches a humidity of 35-45%;
c) extruding by means of a multistage controlled-temperature extruder-cooker;
d) cutting the pasta in a die and pre-drying it at a controlled temperature.

2. A method according to claim 1, characterized in that the percentage of monoglyceride added to the partially gelatinized corn and/or rice flour is 1%.

3. A method according to claim 1, characterized in that humidification in a vacuum mixing tank occurs until the corn and/or rice flour reaches a preferred humidity of 37-38%.

4. A method according to claim 1, characterized in that extrusion occurs by means of a four-stage controlled-temperature extruder-cooker.

5. A method according to claim 1, characterized in that the temperatures in the extruder-cooker are 80^{o} in the first stage, 90^{o} in the second and third stages and 50^{o} in the fourth stage, said temperatures being the actual temperatures of the product being processed.

6. A method according to claim 1, characterized in that the pasta cut by the die is pre-dried by ventilation for approximately 2-5 minutes at a temperature of 35-45^{o} Celsius.

7. A method according to claim 1, characterized in that if dried pasta is being prepared, pre-drying is followed by drying at a temperature of 50^{o} with a relative humidity of 75% in a static drier until a final humidity between 12 and 12.5% is reached.
